# EUROPEAN PATENT APPLICATION

(11) **EP 4 472 160 A1**
(43) Date of publication of application: **04.12.2024**
(21) Application number: 23176687.4
(22) Date of filing: 01.06.2023
(51) Int. Cl.: H04L 41/16, H04L 41/40, H04W 24/00

(54) **5G COMMUNICATION SYSTEM AND METHOD FOR PROVIDING ANALYTICS INFORMATION IN A 5G COMMUNICATION SYSTEM**

(71) Applicant: NTT DOCOMO, INC., Tokyo 100-6150 (JP)
(72) Inventor: BAKHSHI, Bahador, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to various embodiments, a 5G communication system is described comprising a Network Data Analytics Function and an Operation, Administration and Maintenance system, wherein the Operation, Administration and Maintenance system is configured to specify a machine learning model for the Network Data Analytics Function to use to generate analytics information and wherein the Network Data Analytics Function is configured to receive a specification of the machine learning model and use the machine learning model to generate analytics information.

## Description

The present disclosure relates to 5G communication systems and methods for providing analytics information in a 5G communication system.

In a communication network such as a 5G mobile communication network it is important to ensure that a certain service quality can be maintained. For this, network statistical analysis and prediction information (also referred to as analytics information in the following) which may be generated from information like load, resource usage, available components, users mobility, state of components etc. may be monitored to be able to take measures, e.g. when overload is imminent, to avoid a drop of service quality, etc. Prediction information may be provided using a machine learning model. The quality of the predictions, which may be measured as the accuracy of the model, is a crucial factor as the predictions are used to optimize network operation. To achieve high accuracy, approaches are desirable which allow using appropriate machine learning models for that purpose, e.g. machine learning models which are tailored to the requirements and/or characteristics of the communication system (e.g. about how it is used by end users, i.e. subscribers) for which they used to generate analytics information.

According to various embodiments, a 5G communication system is provided comprising a Network Data Analytics Function and an Operation, Administration and Maintenance system, wherein the Operation, Administration and Maintenance system is configured to specify a machine learning model for the Network Data Analytics Function to use to generate analytics information and wherein the Network Data Analytics Function is configured to receive a specification of the machine learning model and use the machine learning model to generate analytics information.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system 100 configured according to 5G (Fifth Generation) as specified by 3GPP (Third Generation Partnership Project).
- Figure 2: illustrates the collection of input data and delivery of analytics by a Network Data Analytics Function (NWDAF).
- Figure 3: shows an NWDAF AnLF (Analytics Logical Function) and an NWDAF MTLF (Model Training Logical Function).
- Figure 4: shows a flow diagram illustrating the subscription/unsubscription of an NWDAF(AnLF) as service consumer to an NWDAF(MTLF) for ML model provision.
- Figure 5: shows a flow diagram illustrating a request of an NWDAF(AnLF) as service consumer to an NWDAF(MTLF) for information about an ML model.
- Figure 6: shows a flow diagram illustrating custom ML model providing from an OAM system to an NWDAF according to an embodiment.
- Figure 7: shows a flow diagram 700 illustrating custom ML model providing from an OAM (Operation, Administration and Maintenance) system to an NWDAF.
- Figure 8: shows a flow diagram illustrating a procedure where an OAM system controls an NWDAF to train a custom ML model according to an embodiment.
- Figure 9: shows a flow diagram illustrating a procedure where an OAM system controls usage of a custom ML model by an NWDAF to provide analytics information to a network function (NF) according to an embodiment.
- Figure 10: shows a flow diagram illustrating a procedure where an OAM system controls usage of a custom ML model by an NWDAF to provide analytics information to an NF according to another embodiment.
- Figure 11: shows a flow diagram illustrating a method for providing analytics information in a 5G communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a 5G communication system, comprising a Network Data Analytics Function and an Operation, Administration and Maintenance system; wherein the Operation, Administration and Maintenance system is configured to specify a machine learning model for the Network Data Analytics Function to use to generate analytics information and wherein the Network Data Analytics Function is configured to receive a specification of the machine learning model and use the machine learning model to generate analytics information.
Example 2 is the 5G communication system according to example 1, wherein the Operation, Administration and Maintenance system is configured to transmit the specification of the machine learning model to the Network Data Analytics Function.
Example 3 is the 5G communication system according to example 1 or 2, wherein the Operation, Administration and Maintenance system is configured to transmit information about temporal validity, spatial validity and/or right of access to the machine learning model to the Network Data Analytics Function and the Network Data Analytics Function is configured to use the machine learning model to generate analytics information and/or to provide access to the machine learning model according to the temporal validity, spatial validity and/or right of access to the machine learning model, respectively.
Example 4 is the 5G communication system according to any one of examples 1 to 3, wherein the Operation, Administration and Maintenance system is configured to transmit information about the machine learning model including storage location information of the machine learning model to the Network Data Analytics Function.
Example 5 is the 5G communication system according to any one of examples 1 to 4, wherein the specification of the machine learning model is a model identification and the Network Data Analytics Function is configured to retrieve values of the trainable parameters of the machine learning model from a storage location of the machine learning model.
Example 6 is the 5G communication system according to example 1, comprising an Analytics Data Repository Function, wherein the Operation, Administration and Maintenance system is configured to specify the machine learning model to the Analytics Data Repository Function, the Analytics Data Repository Function is configured to retrieve information about values of the trainable parameters of the machine learning model from a storage location and store the information about the values of the trainable parameters of the machine learning model and is configured to provide the information about the values of the parameters of the machine learning model to the Network Data Analytics Function in response to a request from the Network Data Analytics Function.
Example 7 is the 5G communication system according to any one of examples 1 to 6, wherein the Operation, Administration and Maintenance system is configured to transmit a specification of one or more cases in which the machine learning model is to be used by the Network Data Analytics Function to generate analytics information to the Network Data Analytics Function and the Network Data Analytics Function is configured to use the machine learning model to generate analytics information in the one or more specified cases.
Example 8 is the 5G communication system according to any one of examples 1 to 6, comprising a network function, wherein the Operation, Administration and Maintenance system is configured to specify the machine learning model to the network function and the network function is configured to provide the specification of the machine learning model to the Network Data Analytics Function and request the Network Data Analytics Function to provide analytics information to the network function using the specified machine learning model.
Example 9 is the 5G communication system according to example 8, wherein the Operation, Administration and Maintenance system is configured to transmit a specification of one or more cases in which the machine learning model is to be used by the Network Data Analytics Function to generate analytics information to the network function and the network function is configured to check whether it requires analytics information for one of the one or more cases and requests the Network Data Analytics Function to provide analytics information to the network function using the specified machine learning model if it has determined that it requires analytics information for one of the one or more cases.
Example 10 is the 5G communication system according to any one of examples 1 to 9, wherein the Operation, Administration and Maintenance system is configured to determine and notify the Network Data Analytics Function about values of training parameters for training the machine learning model and the Network Data Analytics Function is configured to train the machine learning model for generating analytics information according to the about values of the training parameters.
Example 11 is the 5G communication system according to examples 10, wherein the Operation, Administration and Maintenance system is configured to receive information about training parameters supported by the Network Data Analytics Function and is configured to determine and notify the Network Data Analytics Function about values of training parameters for training the machine learning model supported by the Network Data Analytics Function.
Example 12 is a method for providing analytics information in a 5G communication system, comprising specifying, by an Operation, Administration and Maintenance system of the 5G communication system, a machine learning model for a Network Data Analytics Function of the 5G communication system to use to generate analytics information and the Network Data Analytics Function receiving a specification of the machine learning model and using the machine learning model to generate analytics information.
Example 13 is the method of example 12, comprising determining information about usage of the 5G communication system by end users and selecting the machine learning model depending on the determined information about usage.

It should be noted that one or more of the features of any of the examples above may be combined with any one of the other examples. In particular, the Examples described in context of the communication system are analogously valid for the method and vice versa.

According to further embodiments, a computer program and a computer readable medium comprising instructions, which, when executed by a computer, make the computer perform the method of any one of the above Examples are provided.

In the following, various examples will be described in more detail.

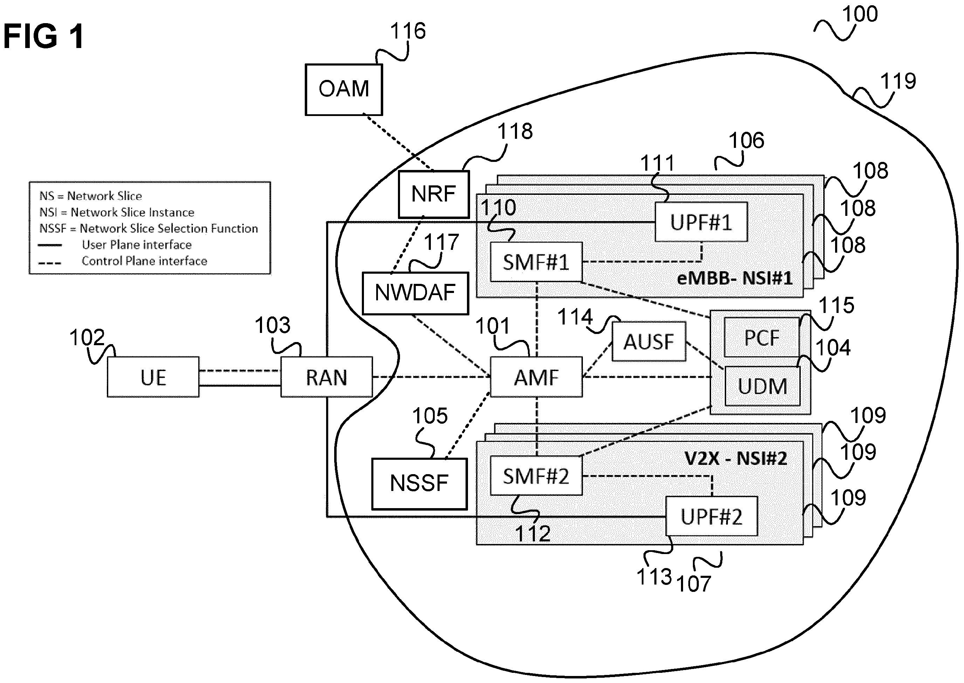

Figure 1 shows a mobile radio communication system 100 configured according to 5G (Fifth Generation) as specified by 3GPP (Third Generation Partnership Project), i.e. a 5G communication system.

The mobile radio communication system 100 includes a mobile radio terminal device 102 such as a UE (user equipment), a nano equipment (NE), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114 and a PCF (Policy Control Function) 115.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

The mobile radio communication system 100 may further include an OAM (Operation, Administration and Maintenance) system 116, e.g. implemented by one or more OAM servers, which is connected to the RAN 103 and the core network 119 (connections are not shown for simplicity). The OAM system 116 may include an MDAS (Management Data Analytics Service). The MDAS may for example provide an analytics report regarding network slice instance load. Various factors may impact the network slice instance load, e.g. number of LTEs accessing the network, number of QoS flows, the resource utilizations of different NFs which are related with the network slice instance.

Further, the core network 118 comprises an NRF (Network Repository Function).

The core network 119 may further include a Network Data Analytics Function (NWDAF) 117. The NWDAF is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. The NWDAF 117 may have an interface to various network functions on the mobile communication network side, e.g. to the AMF 101, the SMFs 110, 112 and the PCF 115. For simplicity, only the interface between the NWDAF 117 and the AMF 101 is depicted.

For example, NWDAF analytics should allow monitoring the number of UEs registered in a network slice instance and their Observed Service Experience. In addition to OAM system performing SLA (service level agreement) assurance, 5GC NFs may take actions based on NWDAF slice QoE analytics to prevent further service experience degradation in the network slice instance.

The NSSF 105 or AMF 101 may for example determine when a load distribution decision is required to address an issue identified by processing the analytics result (i.e. network analysis and/or prediction information) provided by the NWDAF 117. For example, when a network slice instance is detected or forecast to experience service experience degradation, new UE registrations or PDU sessions may not be assigned to that network slice instance anymore by triggering a network slice load distribution mechanism. The NSSF 105, AMF 101 and/or OAM system 116, for example, may also simultaneously subscribe to both slice service experience and slice load analytics from the NWDAF 117. One or multiple subscriptions to one or multiple S-NSSAI(s) and NSI(s) are possible.

To generate the network analysis and/or prediction information, NWDAF 117 collects input data required (e.g. to derive slice service experience analytics), i.e. information for analysis of the state of the network slice instance. The NWDAF 117 may obtain such kind of information by subscribing to network functions to be informed accordingly.

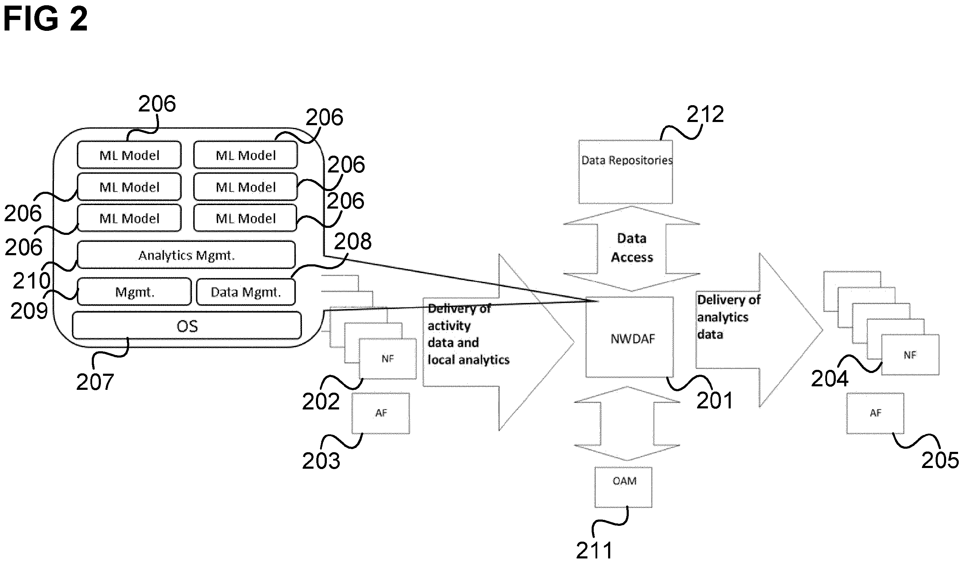

Figure 2 illustrates the collection of input data by an NWDAF 201 (e.g. corresponding to NWDAF 117) from components like one or more network functions 202 and one or more application functions 203 or an OAM 211. The NWDAF 201 may also access data of data repositories 212. From the collected information, the NWDAF 201 derives analytics data to further components, which may again be one or more network functions 204 and one or more application function 205 (and may also be the same or partially the same as the network functions 202 and application functions 203 from which it has collected the input data).

For generating the analytics data, the NWDAF may store (and implement) one or more machine learning (ML) models 206. Further, it for example comprises an operating system 207, a data management component 208, a general management component 209 and an analytics management component 210. As described in detail below, according to various embodiments, the OAM system 211 (e.g. corresponding to OAM system 116) is not only used as a data source for the NWDAF 201 but may control the operation of the NWDAF 201, in particular the usage of ML models 206, the acquisition of new ML models 206 by the NWDAF 201 and the training of ML models 206.

According to 3GPP Release 17 (Rel-17) the NWDAF 117, 301 is decomposed into two functions.

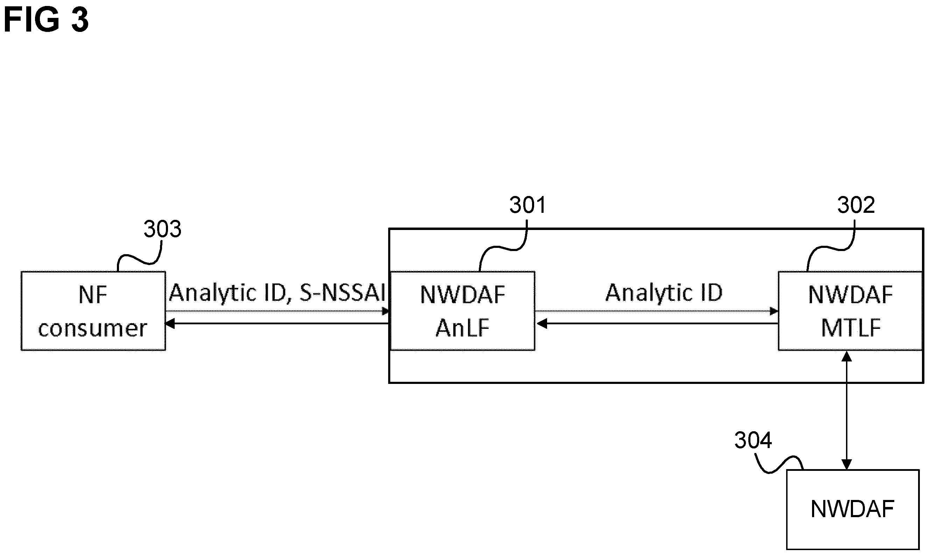

Figure 3 shows an NWDAF AnLF (Analytics Logical Function) 301 and an NWDAF MTLF (Model Training Logical Function) 302, e.g. connected via an Nnwdaf interface.

An NWDAF 301 containing the Analytics logical function is denoted as NWDAF(AnLF) or NWDAF-AnLF or simply AnLF and can perform inference, derive analytics information and expose analytics service i.e. Nnwdaf_Analytics Subscription or Nnwdaf_AnalyticsInfo.

An NWDAF 302 containing the Model Training logical function is denoted as NWDAF(MTLF) or NWDAF-MTLF or simply MTLF, trains machine learning (ML) models and exposes new training services (e.g. providing trained model).

The NWDAF(AnLF) 301 provides an analytics service. It may be contacted by any NF (acting as (analytics) service consumer) 303 (e.g. an AMF or SMF) to be provided with analytics information (e.g. via an Nnf interface).

Input request parameters to the NWDAF(AnLF) 301 by the NF 303 are, e.g. an Analytic ID and an S-NSSAI. The output from the NWDAF(AnLF) 301 is analytics information, i.e. for example statistics and/or prediction (also referred to as network analytics information herein) for an Analytic ID.

Examples of Analytics IDs are UE communication, UE mobility, UE behaviour, User data congestion and Network performance, etc. It should be noted that these Analytics IDs are not slice specific.

The NWDAF 301 may generate analytics using vendor's proprietary ML models embedded (stored or installed) and in it. Specifically, the NWDAF(MTLF) 302 trains one or more ML models for determining analytics information and the NWDAF(AnLF) 301 retrieves the one or more ML models from NWDAF(MTLF) 302 and generates the analytics information for provision.

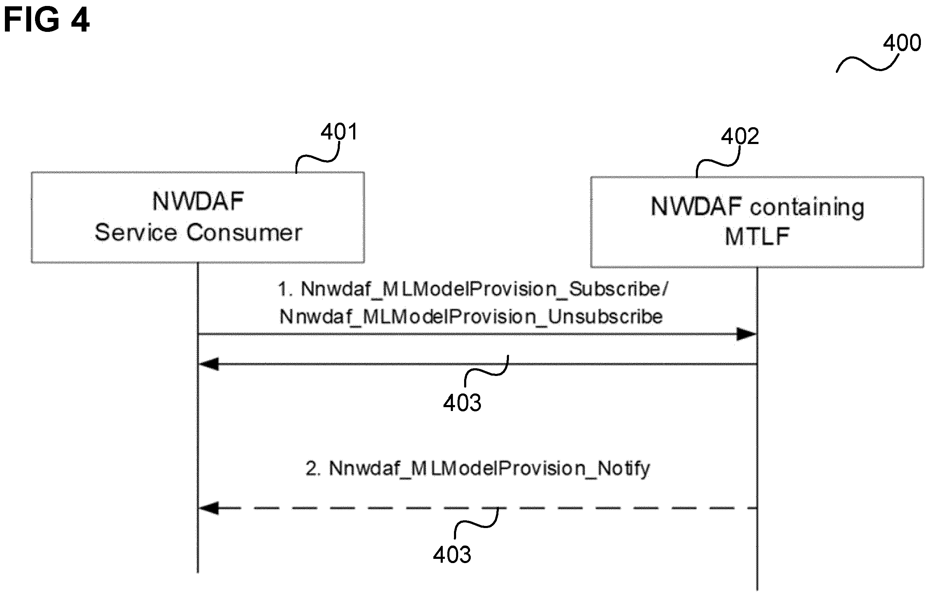

Figure 4 shows a flow diagram 400 illustrating the subscription/unsubscription of an NWDAF(AnLF) as service consumer 401 to an NWDAF(MTLF) 402 for ML model provision in 403.

When the NWDAF(AnLF) 401 is subscribed for model provision, it may for example be notified about the ML model (i.e. the values of the trainable parameters such as neural network weights) by the NWDAF(MTLF) in 404.

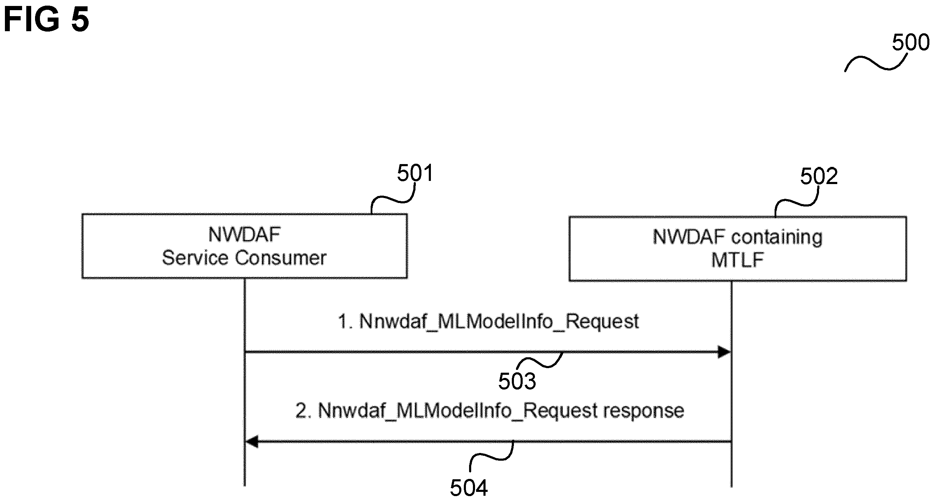

Figure 5 shows a flow diagram 500 illustrating a request in 503 of an NWDAF(AnLF) as service consumer 501 to an NWDAF(MTLF) 502 for information about an ML model (e.g. values of trainable parameters of the ML model, e.g. neural network weights) that the NWDAF(MTLF) 502 has for example trained.

In response to the request, the NWDAF(MTLF) 502 may provide information about the ML model to the NWDAF(AnLF) 501 in 504.

Two NWDAF(MTLF)s (e.g. from different vendors) can share can share ML models. For example, a further NWDAF 304 can request the NWDAF(MTLF) 302 for an ML model. The consumer NWDAF (here the NWDAF 304) may also get an ML model stored by another NWDAF(MTLF) (e.g. here the NWDAF(MTLF) 302) in an ADRF (Analytics Data Repository Function). The NWDAF(MTLF) 302 may for example inform the NWDAF 304 that it should retrieve an ML model (that the NWDAF 304 has requested) from an ADRF (when it has determined that the NWDAF 304 should do so).

An NWDAF 201 typically uses one or more ML models 206 that were installed (embedded) by its vendor into the NWDAF. However, it may be desirable for an operator of a radio communication system 100 to use a custom model (e.g. a model that the operator has obtained from another source than the NWDAF's vendor or that was designed (and possibly (pre-)trained) by the operator).

For example,
- An NWDAF vendor has provided an ML model A to predict UE mobility patterns by the NWDAF but due to special geographical configuration of the network (e.g. for a special coverage area), operator's simulations show that an ML model B performs better. It may thus be desirable for the operator to use model B instead of A in the NWDAF.
- The operator has already an AI engine that is built-up in a group of servers. The operator wants to connect the engine to a 5G communication system, so that the AI engine interacts with NWDAF; e.g., to customize an ML model in NWDAF, to provide new ML models for specific analytics in the NWDAF, for distributed or federated learning and/or to conduct customized analytics by the NWDAF.

A vendor may also want to update and customize an ML models in an NWDAF provided by the vendor.

In view of the above, according to various embodiments, approaches are provided that allow an operator to use their own custom model for generating analytics information (e.g. prediction information) by an NWDAF in a 5G core network (5GC). For this, procedures are provided for providing, training and using custom models, e.g. a procedure for providing a custom ML model in 5GC, training a custom ML model in 5GC and using a custom ML model for generating analytics information. The operator may do so by using its OAM system (e.g. OAM system 211).

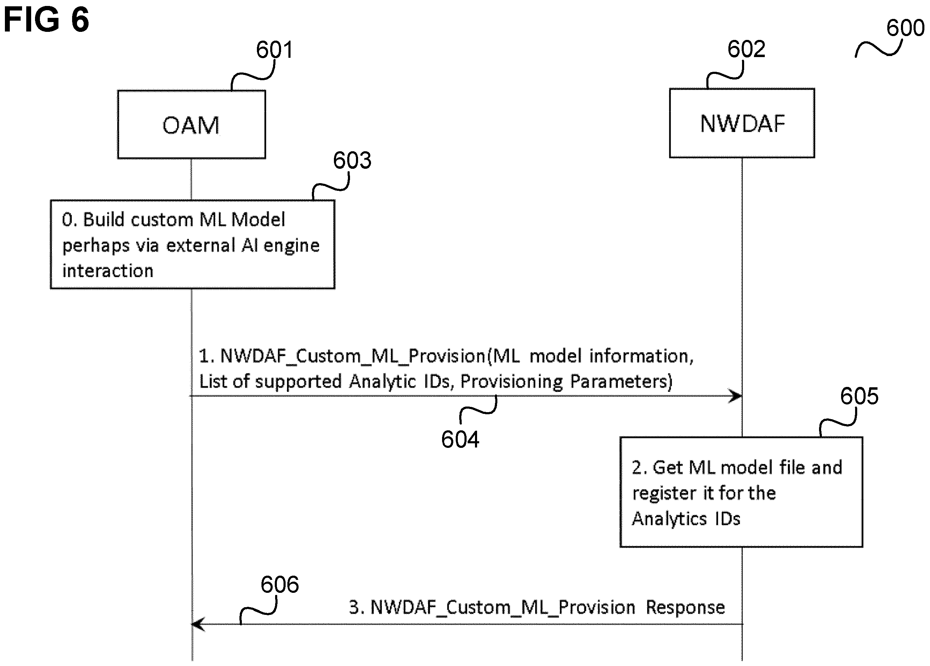

Figure 6 shows a flow diagram 600 illustrating custom ML model providing from an OAM system 601 (e.g. corresponding to OAM system 211) to an NWDAF 602 (e.g. corresponding to NWDAF 201 according to an embodiment ("direct approach").

In 603, the OAM system 601 builds a custom ML model (e.g. by means of other tools of the operator besides the OAM system tools of the OAM system 601 and e.g. via external AI engine interaction).

In 604, the OAM system 601 provides an ML model providing message to the NWDAF 602. The ML model providing message includes
- ML model information, i.e. information about the model such as
   ∘ Model ID
   ∘ Model version
   ∘ Model size
   ∘ Model address (e.g. of a storage location, e.g. URL)
   ∘ Model date
   ∘ Training data information (Input features, Outputs)
   ∘ Accuracy information
   ∘ Framework used for the model
   ∘ etc.
- (model) provision parameters, i.e. information on the model's validity and who has access rights to it
   ∘ Temporal validity
   ∘ Spatial validity
   ∘ Access control (sharing (e.g. whether it may be shared to other NWDAFs), storage, ...)
   ∘ etc.

In 605, the NWDAF 602 acquires the ML model file (i.e. the file containing the complete description of the model including values of trainable parameters of the machine learning model such as neural network weights and the description of the model's architecture including for example the type of the activation functions (e.g. sigmoid) etc.) and registers the model for usage for one or more Analytics IDs. The NWDAF 602 may for example acquire the ML model file from an URL(uniform resource locator) provided by the OAM system 601 as part of the model information.

In 606, the NWDAF 602 responds to the ML model providing message, e.g. acknowledges reception and storage of the ML model.

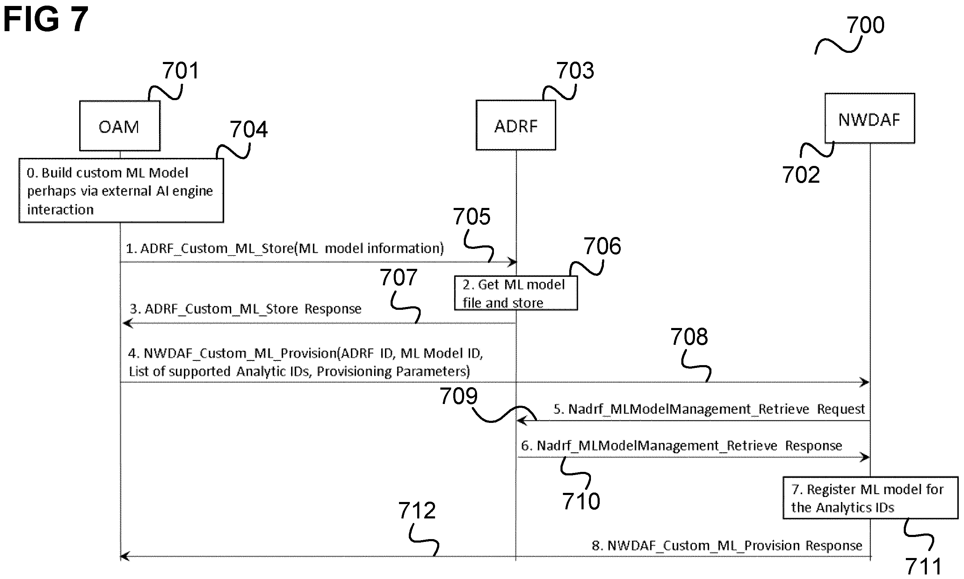

Figure 7 shows a flow diagram 700 illustrating custom ML model providing from an OAM system 701 (e.g. corresponding to OAM system 211) to an NWDAF 702 (e.g. corresponding to NWDAF 201 according to another embodiment ("indirect approach") with the involvement of an ADRF 703.

In 704, the OAM system 701 builds a custom ML model (e.g. by means of other tools of the operator besides the OAM system tools of the OAM system 701 and e.g. via external AI engine interaction).

In 705, the OAM system 701 provides an ML model storage message to the ADRF 703. The ML model storage message includes ML model information (see examples above).

In 706, the ADRF 701 acquires the ML model file and stores the model and acknowledges storage of the ML model in 707.

In 708, the OAM system 701 provides an ML model providing message to the NWDAF 702. The ML model providing message includes model provision parameters (see examples above).

In reaction to the reception of the ML model providing message the NWDAF 702, in 709, sends a model retrieve request to the ADRF 703. In response, the ADRF 703 sends a model retrieve response message to the NWDAF 702 in 710 which contains the ML model information and the (complete) specification of the model (e.g. the ML model file).

In 711, the NWDAF 702 acquires and registers the model for usage for one or more Analytics IDs.

In 712, the NWDAF 702 responds to the ML model providing message, e.g. acknowledges reception and storage of the ML model.

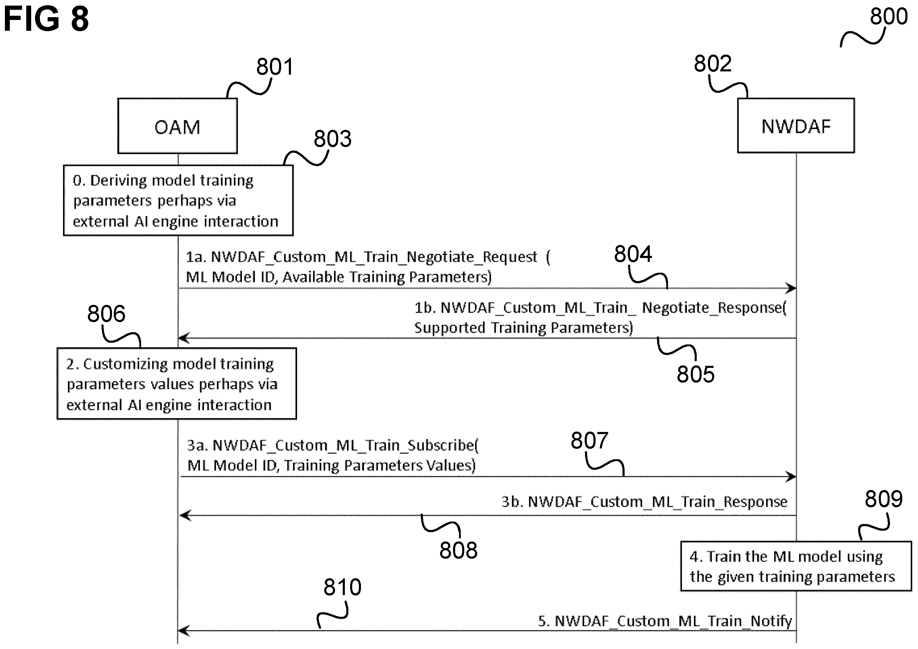

Figure 8 shows a flow diagram 800 illustrating a procedure where an OAM system 801 controls an NWDAF 802 to train a custom ML model according to an embodiment.

In 803, the OAM system 801 determines which model training parameters it may configure (e.g. by means of other tools of the operator besides the OAM system tools of the OAM system 801 and e.g. via external AI engine interaction).

In 804, the OAM system 801 sends an training negotiation request to the NWDAF 802. The training negotiation request includes available training parameters (i.e. training parameters for which the OAM system 801 may provide values) such as
- the loss function
- the learning rate
- the number of epochs
- the batch size
- the number of iterations
- the optimization algorithm
- the dropout rate
- etc.
to be used for the training.

In 805, the NWDAF 802 responds with a training negotiation response including the training parameters it supports (i.e. which may be set by the OAM system 801).

In this example, it is assumed that these are
- the loss function
- the learning rate and
- the optimization algorithm

In 806, the OAM system 801 determines values for the supported training parameters (again for example by means of other tools of the operator besides the OAM system tools of the OAM system 801 and e.g. via external AI engine interaction). According to the above example for the training parameters supported by the NWDAF 802, it for example determines
- Loss function: MSE (mean squared error)
- Learning rate: 0.05
- Optimization algorithm: SGD

In 807, the OAM system 801 provides the determined values to the NWDAF 802 which the NWDAF acknowledges in 808.

In 809, the NWDAF 802 trains the custom model using the training parameter values provided by the OAM system 801 and notifies the OAM system 801 about the training (e.g. about that it has finished training) in 810.

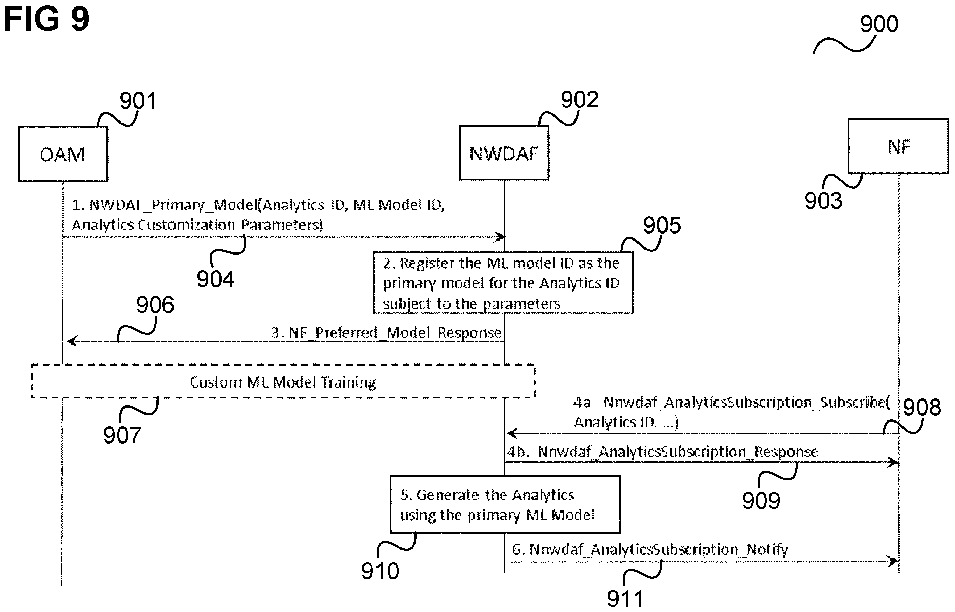

Figure 9 shows a flow diagram 900 illustrating a procedure where an OAM system 901 controls usage of a custom ML model by an NWDAF 902 to provide analytics information to an NF 903 according to an embodiment ("direct approach").

In 904, the OAM system 901 sends a configuration message to the NWDAF 902. The configuration message indicates an Analytics ID and a model ID and includes analytics customization parameters specifying the case in which the model identified by the model ID should be used by the NWDAF 902 for the analytics specified by the Analytics ID, for example
- Target area
- Target period
- Target UEs
- Target NFs
- etc.

In 905, in reaction to the configuration message, the NWDAF 902 registers the identified model as the primary model for the Analytics ID for the specified case and acknowledges the configuration of the configuration message in 906.

Then, in 907, the NWDAF 902 may train the model (e.g. under the control of the OAM system 901 as described with reference to figure 8).

In 908, the NF 903 subscribes to the analytics service. The NWDAF 902 (specifically the NWDAF(AnLF) of the NWDAF) acknowledges the subscription in 909.

In reaction to the subscription, the NWDAF 902 generates analytics information using the model (assuming that the analytics to which the NF 903 has subscribed fulfils the specified case) in 910 and notifies the NF 903 about the analytics information using one or more notification messages in 911.

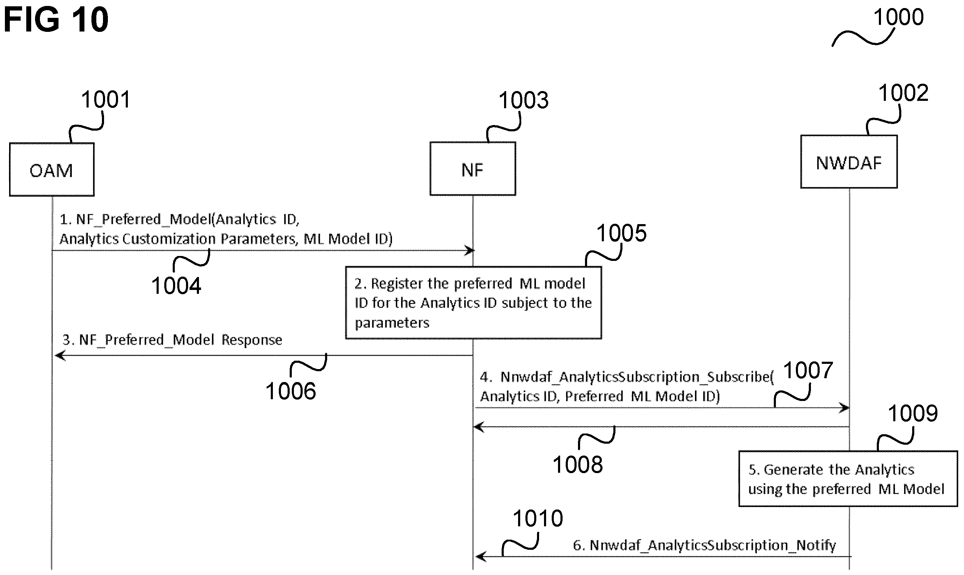

Figure 10 shows a flow diagram 1000 illustrating a procedure where an OAM system 1001 controls usage of a custom ML model by an NWDAF 1002 to provide analytics information to an NF 1003 according to another embodiment ("indirect approach").

In 1004, the OAM system 1001 sends a preferred model message to the NF 1003. The configuration message indicates an Analytics ID and a model ID and includes analytics customization parameters specifying the case in which the model identified by the model ID should be used by the NWDAF 1002 for the analytics specified by the Analytics ID, see the example given above in context of figure 9.

In 1005, in reaction to the preferred model message, the NF 1003 registers the identified model as model for the Analytics ID for the specified case and acknowledges the configuration of the preferred model in 1006.

In 1007, the NF 1003 subscribes to the analytics service for the Analytics ID. In the subscription, the NF 1003 indicates the model (which it has registered as preferred model for the Analytics ID), assuming that the NF 1003 requests analytics for the specified case. The NWDAF 1002 (specifically the NWDAF(AnLF) of the NWDAF) acknowledges the subscription in 1008.

In reaction to the subscription, the NWDAF 1002 generates analytics information using the model indicated by the NF 1003 in 1009 and notifies the NF 1003 about the analytics information using one or more notification messages in 1010.

In summary, according to various embodiments, a 5G communication system is provided which comprises a Network Data Analytics Function and an Operation, Administration and Maintenance system (see for example figure 2), wherein the Operation, Administration and Maintenance system is configured to specify a machine learning model for the Network Data Analytics Function to use to generate analytics information and wherein the Network Data Analytics Function is configured to receive a specification of the machine learning model and use the machine learning model to generate analytics information.

5G communication system may be understood as a communication system according to any 3GGP release.

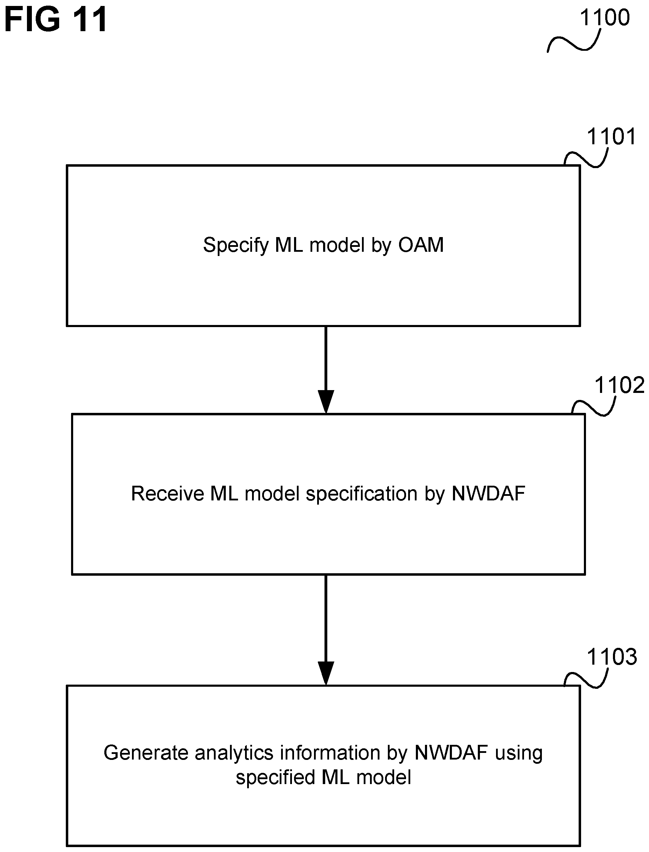

According to various embodiments, a method is provided as illustrated in figure 11.

Figure 11 shows a flow diagram 1100 illustrating a method for providing analytics information in a 5G communication system.

In 1101, an Operation, Administration and Maintenance system of the 5G communication system specifies a machine learning model for a Network Data Analytics Function of the 5G communication system to use to generate analytics information.

In 1102, the Network Data Analytics Function receives a specification of the machine learning model.

In 1103, the Network Data Analytics Function uses the machine learning model to generate analytics information.

According to various embodiments, in other words, an operator of a 5G communication system can configure, using the operator's OAM tools, the machine learning model or models that a NWDAF uses for providing analytics information.

So, according to various embodiments, an operator is enabled to use one or more custom models (of the operator) for analytics in a 5G communication system (in particular in a 5GC, i.e. the core network of a 5G communication system). As described above, according to various embodiments, methods for providing custom ML model in NWDAF, a method for training a custom ML model and methods for using custom model for analytics generation in 5GC are provided.

Thus, rather than using one or more ML models embedded by an NWNDAF vendors into the NWDAF, the operator may use one or more other ML models for generating analytics information, i.e. may manage which ML model(s) are used within the operator's communication system, in particular core network (instead of having to rely on vendor-provided ML models).

The analytics information generated by the one or more ML models ("custom" model(s), i.e. one or more models provided to the NWDAF by the operator for the NWDAF to use for generating analytics information) may be used by other NFs to make decisions; e.g.,
- PFC: Deriving suitable policies
- SMF: Selecting UPF
- AMF: Paging strategy
- NEF: Member UE selection for application function

This allows the operator to obtain more accurate analytics information (e.g. because the operator may use more appropriate ML models for the operator's network, e.g. ML models tailored to characteristics of the operator's communication system and/or service area etc.) which may improve decision making in the network and thus allow the operator to improve network operation and increase quality of service, quality of experiences, reduce costs etc.

The components of the communication system may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A 5G communication system, comprising:
a Network Data Analytics Function and
an Operation, Administration and Maintenance system;
wherein the Operation, Administration and Maintenance system is configured to specify a machine learning model for the Network Data Analytics Function to use to generate analytics information and wherein the Network Data Analytics Function is configured to receive a specification of the machine learning model and use the machine learning model to generate analytics information.

2. The 5G communication system according to claim 1, wherein the Operation, Administration and Maintenance system is configured to transmit the specification of the machine learning model to the Network Data Analytics Function.

3. The 5G communication system according to claim 1 or 2, wherein the Operation, Administration and Maintenance system is configured to transmit information about temporal validity, spatial validity and/or right of access to the machine learning model to the Network Data Analytics Function and the Network Data Analytics Function is configured to use the machine learning model to generate analytics information and/or to provide access to the machine learning model according to the temporal validity, spatial validity and/or right of access to the machine learning model, respectively.

4. The 5G communication system according to any one of claims 1 to 3, wherein the Operation, Administration and Maintenance system is configured to transmit information about the machine learning model including storage location information of the machine learning model to the Network Data Analytics Function.

5. The 5G communication system according to any one of claims 1 to 4, wherein the specification of the machine learning model is a model identification and the Network Data Analytics Function is configured to retrieve values of the trainable parameters of the machine learning model from a storage location of the machine learning model.

6. The 5G communication system according to claim 1, comprising an Analytics Data Repository Function, wherein the Operation, Administration and Maintenance system is configured to specify the machine learning model to the Analytics Data Repository Function, the Analytics Data Repository Function is configured to retrieve information about values of the trainable parameters of the machine learning model from a storage location and store the information about the values of the trainable parameters of the machine learning model and is configured to provide the information about the values of the parameters of the machine learning model to the Network Data Analytics Function in response to a request from the Network Data Analytics Function.

7. The 5G communication system according to any one of claims 1 to 6, wherein the Operation, Administration and Maintenance system is configured to transmit a specification of one or more cases in which the machine learning model is to be used by the Network Data Analytics Function to generate analytics information to the Network Data Analytics Function and the Network Data Analytics Function is configured to use the machine learning model to generate analytics information in the one or more specified cases.

8. The 5G communication system according to any one of claims 1 to 6, comprising a network function, wherein the Operation, Administration and Maintenance system is configured to specify the machine learning model to the network function and the network function is configured to provide the specification of the machine learning model to the Network Data Analytics Function and request the Network Data Analytics Function to provide analytics information to the network function using the specified machine learning model.

9. The 5G communication system according to claim 8, wherein the Operation, Administration and Maintenance system is configured to transmit a specification of one or more cases in which the machine learning model is to be used by the Network Data Analytics Function to generate analytics information to the network function and the network function is configured to check whether it requires analytics information for one of the one or more cases and requests the Network Data Analytics Function to provide analytics information to the network function using the specified machine learning model if it has determined that it requires analytics information for one of the one or more cases.

10. The 5G communication system according to any one of claims 1 to 9, wherein the Operation, Administration and Maintenance system is configured to determine and notify the Network Data Analytics Function about values of training parameters for training the machine learning model and the Network Data Analytics Function is configured to train the machine learning model for generating analytics information according to the about values of the training parameters.

11. The 5G communication system according to claims 10, wherein the Operation, Administration and Maintenance system is configured to receive information about training parameters supported by the Network Data Analytics Function and is configured to determine and notify the Network Data Analytics Function about values of training parameters for training the machine learning model supported by the Network Data Analytics Function.

12. A method for providing analytics information in a 5G communication system, comprising specifying, by an Operation, Administration and Maintenance system of the 5G communication system, a machine learning model for a Network Data Analytics Function of the 5G communication system to use to generate analytics information; and
the Network Data Analytics Function receiving a specification of the machine learning model and using the machine learning model to generate analytics information.

13. The method of claim 12, comprising determining information about usage of the 5G communication system by end users and selecting the machine learning model depending on the determined information about usage.

## Amended claims

### Amended claims in accordance with Rule 137(2) EPC.

1. A 5G communication system, comprising:
A Network Data Analytics Function (117) and
an Operation, Administration and Maintenance system (116);
wherein the Operation, Administration and Maintenance system (116) is configured to:
specify a machine learning model (206) for the Network Data Analytics Function (117) to use to generate analytics information, and
transmit a specification of one or more cases in which the machine learning model (206) is to be used by the Network Data Analytics Function (117) to generate analytics information to the Network Data Analytics Function (117); and
wherein the Network Data Analytics Function (117) is configured to:
receive a specification of the machine learning model (206), and
use the machine learning model (206) to generate analytics information in the one or more specified cases.

2. The 5G communication system (100) according to claim 1, wherein the Operation, Administration and Maintenance system (116) is configured to transmit the specification of the machine learning model (206) to the Network Data Analytics Function (117).

3. The 5G communication system (100) according to claim 1 or 2, wherein the Operation, Administration and Maintenance system (116) is configured to transmit information about temporal validity, spatial validity and/or right of access to the machine learning model (206) to the Network Data Analytics Function (117) and the Network Data Analytics Function (117) is configured to use the machine learning model (206) to generate analytics information and/or to provide access to the machine learning model (206) according to the temporal validity, spatial validity and/or right of access to the machine learning model (206), respectively.

4. The 5G communication system (100) according to any one of claims 1 to 3, wherein the Operation, Administration and Maintenance system (116) is configured to transmit information about the machine learning model (206) including storage location information of the machine learning model (206) to the Network Data Analytics Function (117).

5. The 5G communication system (100) according to any one of claims 1 to 4, wherein the specification of the machine learning model (206) is a model identification and the Network Data Analytics Function (117) is configured to retrieve values of the trainable parameters of the machine learning model (206) from a storage location of the machine learning model (206).

6. The 5G communication system (100) according to claim 1, comprising an Analytics Data Repository Function (703), wherein the Operation, Administration and Maintenance system (116) is configured to specify the machine learning model (206) to the Analytics Data Repository Function (703), the Analytics Data Repository Function (703) is configured to retrieve information about values of the trainable parameters of the machine learning model (206) from a storage location and store the information about the values of the trainable parameters of the machine learning model (206) and is configured to provide the information about the values of the parameters of the machine learning model (206) to the Network Data Analytics Function (117) in response to a request from the Network Data Analytics Function (117).

7. The 5G communication system (100) according to any one of claims 1 to 6, wherein the Operation, Administration and Maintenance system (116) is configured to determine and notify the Network Data Analytics Function (117) about values of training parameters for training the machine learning model (206) and the Network Data Analytics Function (117) is configured to train the machine learning model (206) for generating analytics information according to the about values of the training parameters.

8. The 5G communication system (100) according to claims 7, wherein the Operation, Administration and Maintenance system (116) is configured to receive information about training parameters supported by the Network Data Analytics Function (117) and is configured to determine and notify the Network Data Analytics Function (117) about values of training parameters for training the machine learning model (206) supported by the Network Data Analytics Function (117).

9. A method (1100) for providing analytics information in a 5G communication system (100), comprising an Operation, Administration and Maintenance system (116) of the 5G communication system (100) specifying a machine learning model (206) for a Network Data Analytics Function (117) of the 5G communication system (100) to use to generate analytics information and transmitting a specification of one or more cases in which the machine learning model (206) is to be used by the Network Data Analytics Function (117) to generate analytics information to the Network Data Analytics Function (117); and
the Network Data Analytics Function (117) receiving a specification of the machine learning model (206) and using the machine learning model (206) to generate analytics information in the one or more specified cases.

10. The method (1100) of claim 11, comprising determining information about usage of the 5G communication system (100) by end users and selecting the machine learning model (206) depending on the determined information about usage.

11. A computer program and a computer readable medium including instructions, which, when executed by a computer, make the computer perform the method of claim 9 or 10.
